# EUROPÄISCHE PATENTSCHRIFT

(11) **EP 2 186 713 B1**
(45) Veröffentlichungstag und Bekanntmachung des Hinweises auf die Patenterteilung: **11.07.2012**
(21) Anmeldenummer: 09175752.6
(22) Anmeldetag: 12.11.2009
(51) Int. Cl.: B62D 49/08, B62D 49/06

(54) **Ballastiervorrichtung und landwirtschaftliches Fahrzeug mit einer solchen Vorrichtung**
Ballast device and agricultural vehicle with such device
Dispositif de ballastage et véhicule agricole équipé avec ce dernier

(30) Priorität: 13.11.2008 DE 102008043698
(43) Veröffentlichungstag der Anmeldung: 19.05.2010
(73) Patentinhaber: Deere & Company, Moline, IL 61265-8098 (US)
(72) Erfinder: Bauer Dr.-Ing., Wolfgang, 69469, Weinheim (DE); Smith, Paul R, 68199, Mannheim (DE)
(74) Vertreter: Holst, Sönke

(56) Entgegenhaltungen:
- EP-A2- 2 042 410
- WO-A1-00/51613
- WO-A1-02/21898
- DE-A1-102005 040 954
- US-A- 2 891 681

## Beschreibung

Die Erfindung betrifft eine Ballastiervorrichtung für ein landwirtschaftliches Fahrzeug, mit einem Ballastiergewicht, welches seitliche Aufnahmebolzen aufweist, die koaxial zu einer gemeinsamen Schwenkachse ausgerichtet sind, wobei die Ballastiervorrichtung an den Aufnahmebolzen von den Unterlenkern einer Dreipunktanhängevorrichtung aufnehmbar ist und das Ballastiergewicht in einem aufgenommenen Zustand der Ballastiervorrichtung von einer in Bezug auf den Schwerpunkt des Ballastiergewichts fahrzeugnahen Position in eine fahrzeugferne Position bewegbar ist. Ferner betrifft die Erfindung ein landwirtschaftliches Fahrzeug mit einer solchen Ballastiervorrichtung.

Es ist bekannt, dass landwirtschaftliche Schlepper, bei Arbeiten mit schweren Heck-Anbaugeräten, wie z.B. mit einem Pflug, zum Ausgleich mit einer Zusatzmasse bzw. Zusatzgewicht oder Ballastiergewicht am vorderen Ende des Schleppers bestückt werden. Eine derartige Ballastierung mit einem Ballastiergewicht kann mit einem einteiligen massiven Gewicht (z.B. 900 kg), oder auch durch mehrere kleinere Einzelgewichte (z.B. ä 50 kg) erfolgen. Üblicherweise sind die Ballastiergewichte an einem vorgegebenen Platz am vorderen Teil des Fahrzeugrumpfs angeordnet und fest installiert. Es ist oftmals mit erheblichem Aufwand verbunden und nicht ohne aufwändige Gerätschaften (Gabelstapler, Kran, Hubvorrichtung etc.) realisierbar, die Ballastiergewichte zu montieren bzw. zu demontieren, so dass die Ballastiergewichte nur wenige bzw. aufwändige Möglichkeiten bieten, die durch eine Ballastierung auf die Vorderachse aufgebrachte Zusatzlast zu variieren bzw. den sich ändernden Gegebenheiten bzw. Arbeitsbedingungen optimal anzupassen. Dies führt in der Praxis oftmals dazu, dass meist mit dem gleichen Ballastiergewicht bzw. mit der gleichen Zusatzmasse gearbeitet wird und dadurch der Schlepper nicht optimal ballastiert unterwegs ist. Dies kann ferner weitere Nachteile mit sich führen: Einen grundsätzlich höheren Kraftstoffverbrauch sowie eine geringere Zuladung bei hochballastigen Ballastiergewichten. Eine größere Fahrzeuglänge und eine damit verbundene geringere Wendigkeit bei Ballastiergewichten die am vorderen Teil des Fahrzeugrumpfs angeordnet sind. Einen relativ hohen Schwerpunkt des Fahrzeugs, da das Ballastiergewicht in der Regel vor dem Fahrzeugrumpf oberhalb der Fahrzeugachse angeordnet ist. Ein damit verbundenes hohes Gefahrenpotential für Unfallgegner bei Straßenfahrt, insbesondere für Pkw's, da das Ballastiergewicht in der Regel relativ hoch im Vergleich zu einem Pkw angebracht ist, so dass diese entweder überrollt oder in ungeschützten Bereichen (Fenster, bzw. Dach) durch das Ballastiergewicht gerammt werden.

Im Stand der Technik sind Lösungen bekannt, mit denen versucht wird diese Probleme zu bekämpfen. So ist es beispielsweise bekannt, eine Fronthydraulik, insbesondere Fronthitch, einzusetzen, mit der ein Zusatzgewicht bzw. ein Ballastiergewicht zur Ballastierung einfach und bequem im Bedarfsfall aufgenommen werden kann. Derartige Fronthydrauliken ermöglichen jedoch nur eine festgelegte Lage des Ballastiergewichts, so dass die oben genannten Probleme nur teilweise berücksichtigt werden.

Es ist ferner bekannt, eine Ballastierung durch ein Zusatzgewicht bzw. Ballastiergewicht dahingehend den geforderten und vorherrschenden Arbeitsbedingungen anzupassen, dass die Anordnung des Gewichts am Fahrzeug variabel ist und insbesondere eine Verschiebung des Gewichts in Längsrichtung des Fahrzeugs ermöglicht wird.

Eine derartige verstellbare Vorrichtung an einem landwirtschaftlichen Schlepper offenbart die US4322094A1. Hier wird über eine auf der Unterseite des Fahrzeugrumpfes angeordnete längsverschiebbar gelagerte Platte ein mit der Platte verbundenes Ballastiergewicht hydraulisch verschoben. Diese Vorrichtung weist einen hohen konstruktiven Aufwand auf und löst die oben genannten Probleme ebenfalls nur teilweise.

So offenbart die DE 3223990 A1 einen landwirtschaftlichen Schlepper, der seitlich des vorderen Fahrzeugrumpfes ein hydraulisch betriebenes Parallelogrammgestänge aufweist, mit dem ein vor dem Fahrzeugrumpf geführtes Zusatzgewicht vorwiegend in Längsrichtung von einer oberen fahrzeugnahen Position in eine untere fahrzeugferne Position bewegt werden kann. Nachteilig wirkt sich hier aus, dass der Schwerpunkt des Zusatzgewichts in seiner fahrzeugnahen Position aufgrund der Ausgestaltung des Gestänges relativ hoch liegt. Ferner nimmt die Anordnung unvorteilhaft viel Raum seitlich des Fahrzeugs in Anspruch.

Ferner offenbart die DE 10 2005 040 954 A1 eine gattungsgemäße Ballastiervorrichtung an einem landwirtschaftlichen Fahrzeug, wobei mittels einer Fronthitch ein Ballastiergewicht aus einer fahrzeugnahen Position in eine fahrzeugferne Position verschwenkt werden kann. Nachteilig ist hier, dass das Ballastiergewicht in seiner fahrzeugnahen Position einen relativ hohen Schwerpunkt aufweist, der deutlich über der Vorderachse des Fahrzeugs liegt. So werden auch hier die oben genannten Nachteile nicht überwunden.
Die der Erfindung zugrunde liegende Aufgabe wird darin gesehen, eine landwirtschaftliche Maschine der eingangs genannten Art anzugeben, durch welches die vorgenannten Probleme überwunden werden.

Die Aufgabe wird erfindungsgemäß durch die Lehre des Patentanspruchs 1 und 7 gelöst. Weitere vorteilhafte Ausgestaltungen und Weiterbildungen der Erfindung gehen aus den Unteransprüchen hervor.

Erfindungsgemäß wird eine Ballastiervorrichtung der eingangs genannten Art derart ausgebildet, dass die Schwerpunktlage des Ballastiergewichts in der fahrzeugnahen Position unterhalb der Schwenkachse ist und Schwenkmittel vorgesehen sind, durch die das Ballastiergewicht derart um die Schwenkachse verschwenkbar ist, dass es aus der fahrzeugnahen Position in die fahrzeugferne Position bewegbar ist, wobei das Ballastiergewicht in der fahrzeugnahen Position eine tiefere Schwerpunktlage einnimmt als in der fahrzeugfernen Position. Eine erfindungsgemäße Ballastiervorrichtung ermöglicht, durch Längsverlagerung des Ballastiergewichts, die auf die Vorderräder des Fahrzeugs wirkende Zusatzmasse einzustellen und optimal den vorherrschenden Betriebsbedingungen anzupassen. Dadurch kann zur Ballastierung eine insgesamt geringere Gesamtmasse eingesetzt werden. Dadurch, dass das Ballastiergewicht beweglich ist, kann es auch auf einfache Weise in eine Aufbockstellung gebracht werden. Das erleichtert sowohl das Abstellen bzw. Abmontieren als auch das Aufsetzen bzw. Anmontieren des Ballastiergewichts. Vorteilhafterweise ist die Ballastiervorrichtung an eine Dreipunktanhängevorrichtung eines landwirtschaftlichen Schleppers koppelbar. Damit ist eine einfache Handhabung des Ballastiergewichts gegeben, wobei die Ballastiervorrichtung an den am Ballastiergewicht vorgesehenen Aufnahmebolzen durch die Unterlenker der Dreipunktanhängevorrichtung aufgenommen werden kann. Durch die Schwerpunktlage des Schwerpunkts des Ballastiergewichts, die unterhalb der durch die Aufnahmebolzen definierten Schwenkachse des Ballastiergewichts angeordnet ist, wird ermöglicht, dass durch Verschwenken des Ballastiergewichts nach vorn um die Schwenkachse eine Schwerpunktverlagerung des Gewichts von einer unteren fahrzeugnahen Position in eine obere fahrzeugferne Position realisierbar ist. Damit sind beispielsweise bei Transportfahrten ohne großen Aufwand höhere Zuladungen möglich und es wird ein insgesamt geringerer Kraftstoffverbrauch erzielt. Durch die niedrige Schwerpunktlage des Ballastiergewichts in der fahrzeugnahen Position wird zudem ein Personen- und Fahrzeugschutz im Straßenverkehr erhöht, da Hindernisse bei Kollisionen, z.B. bei einem Unfall mit einem Pkw, in einer tieferen Position gerammt werden, so dass auch ein Überrollen vermieden werden kann. Die fahrzeugnahe Position des Ballastiergewichts bietet eine maximale Wendigkeit des Fahrzeugs, da das vorstehende Ballastiergewicht nicht so weit herausragt. Durch die fahrzeugnahe Position mit tiefer Schwerpunktlage des Ballastiergewichts wird auch die Fahrsicherheit bei Kurvenlage oder Hanglage des Fahrzeugs erhöht.

Vorzugsweise weisen die Schwenkmittel ein Aufnahmelager am Ballastiergewicht auf, an das ein längenverstellbarer Lenker drehbar koppelbar ist, derart, dass durch eine Längenänderung des Lenkers ein Verschwenken des Ballastiergewichts erzielbar ist. Durch Längenveränderung des längenverstellbaren Lenkers wird das Aufnahmelager am Ballastiergewicht in einem festen Abstand zu den Aufnahmebolzen bzw. zur Schwenkachse verschoben, so dass eine Rotationsbewegung des Ballastiergewichts um die Schwenkachse eingeleitet wird. Dadurch verschiebt sich der Schwerpunkt des Ballastiergewichts in einem festen Abstand (Radius) zur Schwenkachse, so dass bei aufgenommenen Aufnahmebolzen, beispielsweise wenn diese durch die Unterlenker einer Dreipunktanhängevorrichtung aufgenommen sind, eine Schwerpunktverlagerung des Ballastiergewichts aus einer unteren fahrzeugnahen Position in eine obere fahrzeugferne Position stattfindet.

In einer bevorzugten Ausbildung der Erfindung ist das Aufnahmelager der Ballstiervorrichtung derart ausgebildet, dass daran ein längenverstellbarer Lenker einer Dreipunktanhängevorrichtung, insbesondere ein sogenannter Oberlenker, koppelbar ist. Dadurch wird ermöglicht, dass die genannte Ballastiervorrichtung mit einer Dreipunktanhängevorrichtung üblicher Bauart kompatibel und an diese koppelbar ist. Bei angekoppelter Ballastiervorrichtung wird durch Längenverstellung des Oberlenkers, wie oben bereits beschrieben, eine Rotationsbewegung des Ballastiergewichts um die Schwenkachse eingeleitet. Die Schwenkachse wird dabei durch die seitlichen Aufnahmebolzen, die von den Unterlenkern der Dreipunktanhängevorrichtung gehalten werden, definiert.

In einer weiteren bevorzugten Ausbildung weisen die Schwenkmittel neben dem Aufnahmelager am Ballastiergewicht, wenigstens ein Lenkblech mit wenigstens drei Anlenkpunkten und einen längenverstellbaren Lenker auf, wobei das Lenkblech an einem (ersten) Anlenkpunkt über den längenverstellbaren Lenker drehbar mit dem Aufnahmelager und an einem weiteren (zweiten) Anlenkpunkt koaxial zur Schwenkachse drehbar mit dem Ballastiergewicht verbunden ist, derart, dass durch eine Längenänderung des längenverstellbaren Lenkers ein Verschwenken des Ballastiergewichts gegenüber dem Lenkblech erzielbar ist, wobei das Lenkblech an einem weiteren (dritten) Anlenkpunkt mit einem Lenker einer Dreipunktanhängevorrichtung, vorzugsweise dem Oberlenker, koppelbar ist. Dadurch, dass der zweite Anlenkpunkt des Lenkblechs koaxial zu der Schwenkachse bzw. zu den Aufnahmebolzen angeordnet ist, wird bei Ankopplung der Ballastiervorrichtung an eine Dreipunktanhängevorrichtung die Position des zweiten Anlenkpunkts koaxial zu den Aufnahmebolzen der Ballastiervorrichtung durch die Unterlenker festgelegt, bzw. vorgegeben. Sofern diese verstellbar (höhen- oder längenverstellbar) ausgebildet sind, kann durch Verstellen der Unterlenker die Schwenkachse der Ballastiervorrichtung und damit auch die Position des zweiten Aufnahmepunkts variiert bzw. verstellt bzw. verschoben werden. Ferner wird bei Ankopplung der Ballastiervorrichtung an eine Dreipunktanhängevorrichtung auch die Position des dritten Anlenkpunkts des Lenkblechs durch den Lenker der Dreipunkanhängevorrichtung (insbesondere dem Oberlenker) festgelegt, wobei die Position des dritten Anlenkpunktes durch Verstellen der Unterlenker variierbar bzw. verstellbar bzw. verschiebbar ist. Somit können die Positionen des zweiten und dritten Anlenkpunktes (und damit auch die Position des ersten Anlenkpunktes) bei angekoppelter Ballastiervorrichtung, durch Verstellen der Unterlenker, in Bezug auf einen mit einer Dreipunktanhängevorrichtung bestückten Fahrzeugrahmen, definiert variiert bzw. verstellt bzw. verschoben werden. Ferner ist es auch möglich, den mit dem dritten Anlenkpunkt verbundenen Lenker längenverstellbar zu gestalten, um weitere Möglichkeiten zur Veränderung der Positionen der Anlenkpunkte des Lenkblechs zu schaffen.

Vorzugsweise ist (bzw. sind) der (die) längenverstellbare(n) Lenker als Aktuator, insbesondere als Hydraulikzylinder, ausgebildet. Es ist jedoch auch denkbar eine andere, beispielsweise elektrische, mechanische oder pneumatische Betätigungsart eines Zylinders zu wählen. So kann der Aktuator als Elektromotor, beispielsweise Spindelmotor, ausgebildet sein. Auch eine entsprechende Anordnung mit einem Seilzug ist denkbar, um die Betätigung rein mechanisch zu gestalten. Vorzugsweise ist der Aktuator derart angelenkt, dass durch Betätigen des Aktuators im Zusammenspiel der Ballastiervorrichtung mit den Lenkern der Dreipunktanhängevorrichtung ein geführtes Bewegen des Ballastiergewichts ausgelöst werden kann. Dadurch wird gewährleistet, dass eine Bedienperson durch Fernsteuerung ein Variieren bzw. Verschieben bzw. Verstellen des Ballastiergewichts realisieren und auch bei sich ändernden Betriebsbedingungen schnell reagieren und die Ballastierung optimieren kann.

In einer bevorzugten Ausbildung der Erfindung erstrecken sich die Schwenkmittel wenigstens teilweise durch eine am Ballastiergewicht eingebrachte Aussparung, wobei die Aussparung vorzugsweise mittig zu einer Mittellängsachse des Fahrzeugs bzw. Fahrzeugrahmens ausgebildet ist. Je nach Ausführungsform können sich die Schwenkmittel auch wenigstens teilweise durch eine Aussparung erstrecken, die am Fahrzeugrumpf und/oder an einem Fahrzeugrahmen und/oder an einer am Fahrzeugrumpf oder Fahrzeugrahmen ausgebildeten Aufnahmevorrichtung eingebracht ist, wobei diese ebenfalls entsprechend mittig ausgebildet ist. Durch die Aussparung bzw. Aussparungen wird bzw. werden eine möglichst kompakte Bauweise der Schwenkmittel, insbesondere des Lenkblechs im Zusammenspiel mit dem oder den längenverstellbaren Lenker bzw. Lenkern, erzielt, da die Schwenkmittel im Wesentlichen innerhalb der Aussparung ihre Schwenkbewegungen ausführen. Die mittige Anordnung der Aussparung sorgt für eine möglichst symmetrische Gewichtsverteilung des Ballastiergewichts bzw. der gesamten Ballastiervorrichtung.

Ferner umfasst eine weitere Ausbildung der Erfindung ein landwirtschaftliches Fahrzeug, insbesondere Schlepper, mit einem Fahrzeugrumpf oder Fahrzeugrahmen, einer am vorderen Teil des Fahrzeugrumpfs befestigten Dreipunktanhängevorrichtung und einer Ballastiervorrichtung, wobei die Ballastiervorrichtung ein Ballastiergewicht mit seitlichen Aufnahmebolzen aufweist, die koaxial zu einer gemeinsamen Schwenkachse ausgerichtet sind, wobei die Ballastiervorrichtung an den Aufnahmebolzen von den Unterlenkern der Dreipunktanhängevorrichtung aufgenommen ist und das Ballastiergewicht in Bezug auf den Schwerpunkt des Ballastiergewichts von einer fahrzeugnahen Position in eine fahrzeugferne Position bringbar ist. Die Ballastiervorrichtung ist, wie oben bereits ausgeführt, derart ausgebildet, dass die Schwerpunktlage des Ballastiergewichts in der fahrzeugnahen Position unterhalb der Schwenkachse ist und Schwenkmittel vorgesehen sind, durch die das Ballastiergewicht derart um die Schwenkachse verschwenkbar ist, dass es aus der fahrzeugnahen Position in die fahrzeugferne Position bringbar ist, wobei das Ballastiergewicht in der fahrzeugnahen Position eine tiefere Schwerpunktlage einnimmt als in der fahrzeugfernen Position.

Weitere bevorzugte Ausbildungen eines landwirtschaftlichen Fahrzeugs, insbesondere Schleppers, sind gemäß oben bereits beschriebener Ausführungen einer Ballastiervorrichtung entsprechend vorgesehen und sollen hier berücksichtigt sein.
Das Ballastiergewicht kann ferner derart ausgebildet sein, dass es in seiner fahrzeugnahen Position wenigstens teilweise unterhalb des Fahrzeugrumpfs angeordnet ist. Dadurch kann beispielsweise eine weitere Schwerpunktverlagerung nach unten erzielt und zum anderen das Hervorstehen des Ballastiergewichts vor dem Fahrzeugrumpf weiter reduziert werden, wodurch sich die oben genannten Vorteile in Bezug auf einen tiefen Schwerpunkt und auf eine maximale Wendigkeit noch stärker ausprägen können.

In seiner fahrzeugfernen Position kann das Ballastiergewicht beispielsweise auf gleiche Höhe wie der Fahrzeugrumpf und vor dem Fahrzeugrumpf angeordnet sein. Dadurch wird eine hohe Bodenfreiheit bei Feldarbeiten gewährleistet und eine maximale Lasterhöhung an der Vorderachse erzielt.

In einer bevorzugten Ausgestaltung der Erfindung sind die Lenker der Ballastiervorrichtung bzw. der Dreipunktanhängevorrichtung über eine Arretiervorrichtung in den einstellbaren Stellungen arretierbar. Dadurch wird gewährleistet, dass das Ballastiergewicht sicher und vorzugsweise spielfrei in einer fahrzeugnahen oder auch fahrzeugfernen Position gehalten wird. Hierbei ist es möglich auch Positionen zwischen der fahrzeugnahen und der fahrzeugfernen Position arretierbar vorzusehen, so dass eine Ballastierung entsprechend feinabgestimmt durchgeführt werden kann. Vorzugsweise umfasst die Arretiervorrichtung, dass der oder die verstellbaren Lenker der Schwenkmittel bzw. der Dreipunktvorrichtung hydraulisch oder pneumatisch bzw. mechanisch bzw. elektrisch in einer bestimmten Stellung arretierbar sind, also gehalten bzw. blockiert werden können, so dass die verstellbaren Lenker in einer gehaltenen bzw. blockierten Stellung verweilen. Eine derartige Arretierung bzw. Blockierung kann an einem längenverstellbaren Lenker, der einen hydraulisch ausgebildeten Aktuator umfasst, beispielsweise hydraulisch erfolgen. Ein elektrisch betätigbarer Spindel- oder Schrittmotor als Aktuator kann beispielsweise durch entsprechende elektronische Steuersignale in seiner Position verharren und die Lenkeranordnung elektrisch blockieren.

Anhand der Zeichnungen, die mehrere Ausführungsbeispiele der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines landwirtschaftlichen Fahrzeugs mit einer an eine Front-Dreipunktanhängevorrichtung gekoppelten Ballastiervorrichtung
- Fig. 2: eine schematische Seitenansicht eines ersten erfindungsgemäßen Ausführungsbeispiels einer an eine Dreipunktanhängevorrichtung gekoppelten Ballastiervorrichtung in einer Grundstellung,
- Fig. 3: eine schematische Seitenansicht der an eine Dreipunktanhängevorrichtung gekoppelten Ballastiervorrichtung aus Figur 2 in einer Mittelstellung,
- Fig. 4: eine schematische Seitenansicht der an eine Dreipunktanhängevorrichtung gekoppelten Ballastiervorrichtung aus den Figuren 2 oder 3 in einer Endstellung,
- Fig. 5: eine schematische Draufsicht der an eine Dreipunktanhängevorrichtung gekoppelten Ballastiervorrichtung aus den Figuren 2 bis 4 in der Grundstellung,
- Fig. 6: eine schematische Frontansicht der an eine Dreipunktanhängevorrichtung gekoppelten Ballastiervorrichtung aus den Figuren 2 bis 5 in der Grundstellung,
- Fig. 7: eine schematische Seitenansicht eines zweiten erfindungsgemäßen Ausführungsbeispiels einer an eine Dreipunktanhängevorrichtung gekoppelten Ballastiervorrichtung in einer Grundstellung,
- Fig. 8: eine schematische Seitenansicht der an eine Dreipunktanhängevorrichtung gekoppelten Ballastiervorrichtung aus Figur 7 in einer Mittelstellung,
- Fig. 9: eine schematische Seitenansicht der an eine Dreipunktanhängevorrichtung gekoppelten Ballastiervorrichtung aus den Figuren 7 oder 8 in einer Endstellung,
- Fig. 10: eine schematische Draufsicht der an eine Dreipunktanhängevorrichtung gekoppelten Ballastiervorrichtung aus den Figuren 7 bis 9 in der Grundstellung,
- Fig. 11: eine schematische Frontansicht der an eine Dreipunktanhängevorrichtung gekoppelten Ballastiervorrichtung aus den Figuren 7 bis 10 in der Grundstellung,
- Fig. 12: eine schematische Seitenansicht eines dritten erfindungsgemäßen Ausführungsbeispiels einer an eine Dreipunktanhängevorrichtung gekoppelten Ballastiervorrichtung in einer Grundstellung,
- Fig. 13: eine schematische Seitenansicht der an eine Dreipunktanhängevorrichtung gekoppelten Ballastiervorrichtung aus Figur 12 in einer Endstellung
- Fig. 14: eine schematische Draufsicht der an eine Dreipunktanhängevorrichtung gekoppelten Ballastiervorrichtung aus den Figuren 12 oder 13 in der Grundstellung,
- Fig. 15: eine schematische Frontansicht der an eine Dreipunktanhängevorrichtung gekoppelten Ballastiervorrichtung aus den Figuren 12 bis 14 in der Grundstellung,
- Fig. 16: eine schematische Seitenansicht eines vierten erfindungsgemäßen Ausführungsbeispiels einer an eine Dreipunktanhängevorrichtung gekoppelten Ballastiervorrichtung in einer Grundstellung,
- Fig. 17: eine schematische Seitenansicht der an eine Dreipunktanhängevorrichtung gekoppelten Ballastiervorrichtung aus Figur 16 in einer Endstellung
- Fig. 18: eine schematische Draufsicht der an eine Dreipunktanhängevorrichtung gekoppelten Ballastiervorrichtung aus den Figuren 16 oder 17 in der Grundstellung und
- Fig. 19: eine schematische Frontansicht der an eine Dreipunktanhängevorrichtung gekoppelten Ballastiervorrichtung aus den Figuren 16 bis 18 in der Grundstellung.

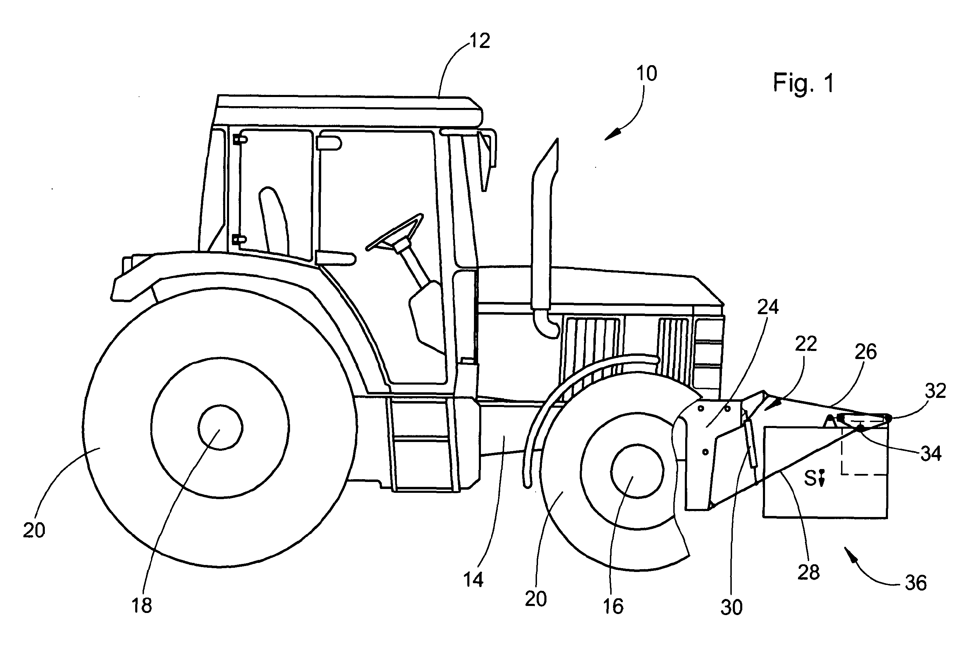

In der Figur 1 ist ein erfindungsgemäßes landwirtschaftliches Fahrzeug 10 in Form eines Schleppers 12 dargestellt. Der Schlepper 12 weist einen Fahrzeugrahmen 14 auf, der von an einer Vorderachse 16 und einer Hinterachse 18 aufgehängten Rädern 20 getragen wird. An den Fahrzeugrahmen 14 ist an der Vorderseite des Fahrzeugs 10 eine Front-Dreipunktanhängevorrichtung 22 angeordnet, welche lösbar über einen Befestigungsrahmen 24 an den Fahrzeugrahmen 14 befestigt, insbesondere mit diesem verschraubt ist, und sich über den Fahrzeugrahmen 14 hinaus nach vorn erstreckt.

Die Front-Dreipunktanhängevorrichtung 22 weist einen mittig zum Fahrzeug 10 und im oberen Bereich der Dreipunktanhängevorrichtung 22 angeordneten Oberlenker 26 sowie zwei seitlich zum Oberlenker 26 und im unteren Bereich der Dreipunktanhängevorrichtung 22 angeordnete Unterlenker 28 auf, die jeweils schwenkbar an dem Befestigungsrahmen 24 gelagert sind. Zwischen den Unterlenkern 28 und dem Befestigungsrahmen 22 erstrecken sich jeweils eine Hubstrebe 30, welche die Unterlenker 28 in einer gewünschten Schwenkposition zum Befestigungsrahmen 22 halten. Die Hubstreben 30 können als Hydraulikzylinder ausgebildet sein, so dass die Unterlenker 28 hydraulisch höhenverstellbar bzw. winkelverstellbar bzw. verschwenkbar sind. Die Ober- und Unterlenker 26, 28 sind jeweils mit Anlenkpunkten 32 bzw. Fanghaken 34 versehen, an die eine für die Dreipunktanhängevorrichtung ausgelegte Arbeitsvorrichtung in Form einer erfindungsgemäßen Ballastiervorrichtung 36 gekoppelt bzw. angehängt ist.

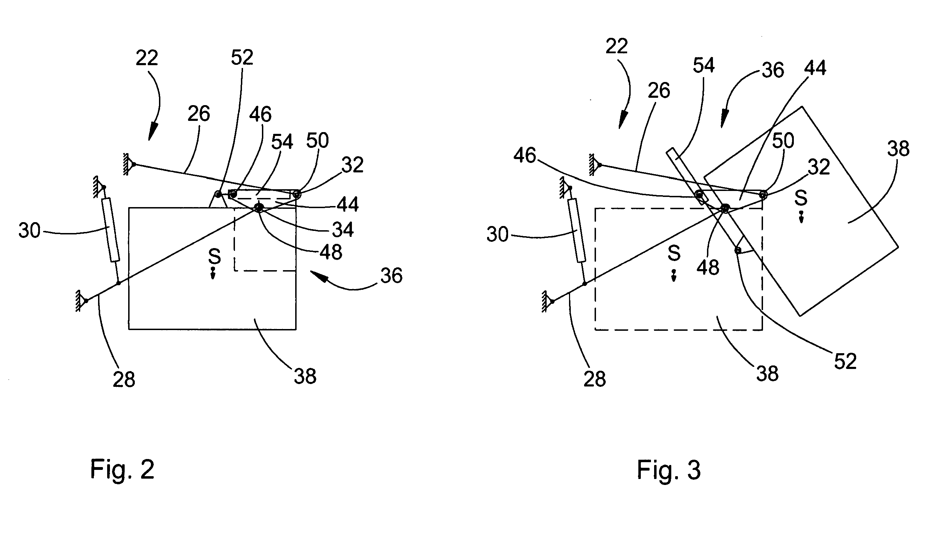

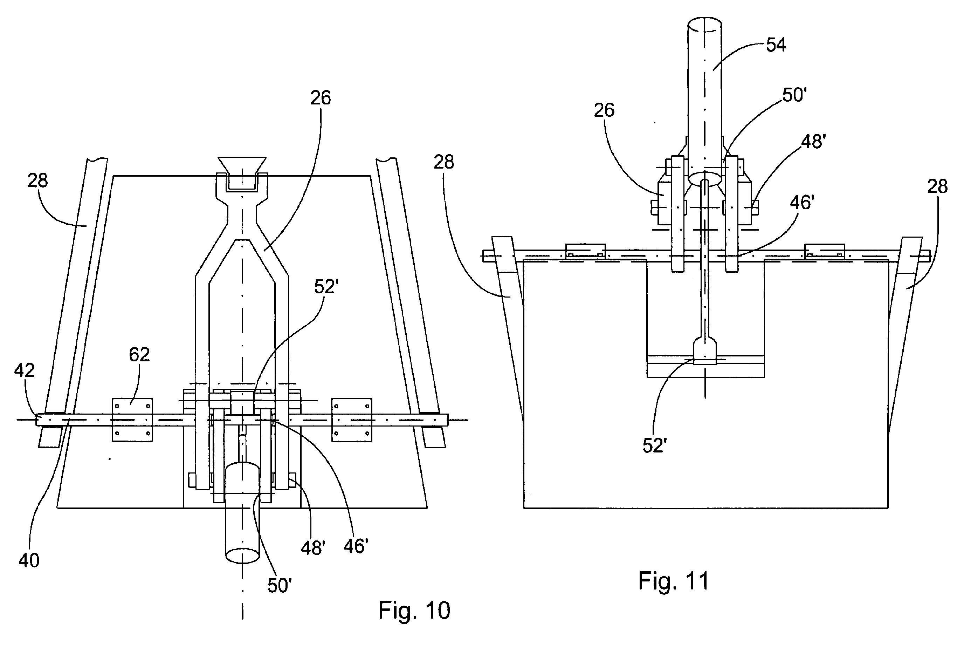

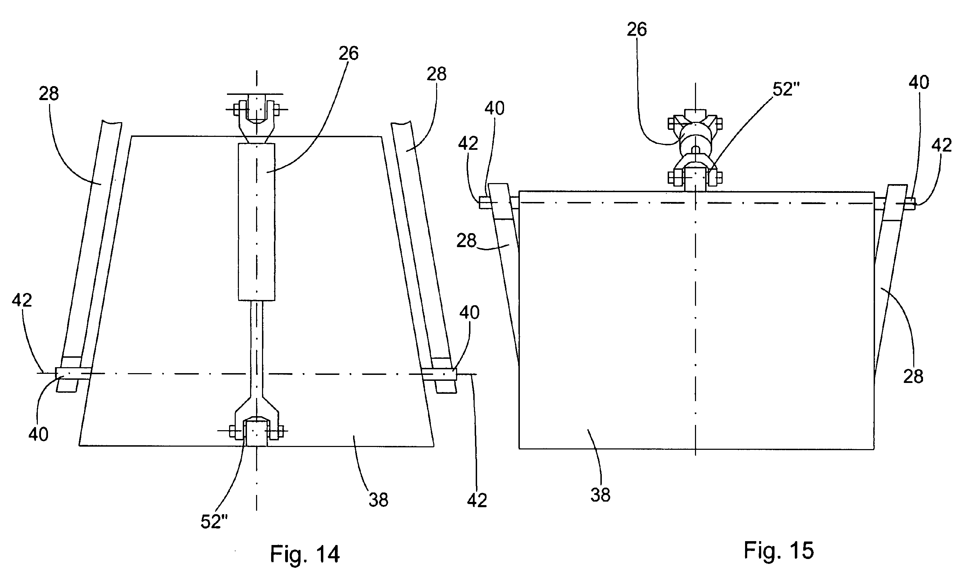

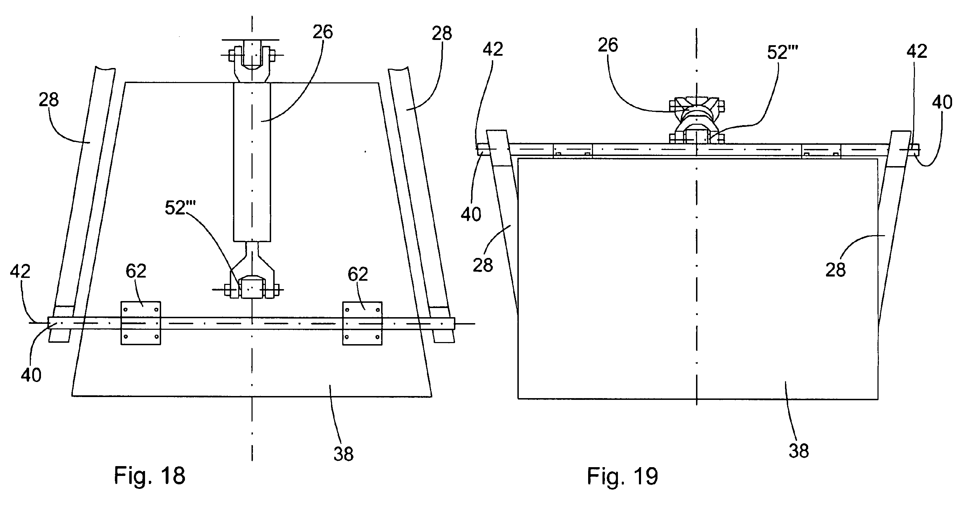

Anhand der Figuren 2 bis 19 werden im Folgenden vier verschiedene Ausführungsbeispiele einer erfindungsgemäßen Ballastiervorrichtung 36 beschrieben.

Die im Folgenden beschriebenen Ballastiervorrichtungen 36 weisen jeweils ein Ballastiergewicht 38 auf, welches über sich seitlich erstreckende Aufnahmebolzen 40 (seitlich im Sinne von quer zu einer Fahrzeuglängsachse) und über Schwenkmittel schwenkbar um eine durch die Aufnahmebolzen 40 definierte Schwenkachse 42 von den Unterlenkern der Dreipunktanhängevorrichtung aufgenommen wird bzw. schwenkbar an die Dreipunktanhängevorrichtung 22 gekoppelt ist. Die Schwenkachse 42 wird am Ballastiergewicht 38 derart angeordnet, dass bei einer Grundstellung der Ballastiervorrichtung 38 (eingefahrene, fahrzeugnahe, untere Position des Ballastiergewichts) die Schwenkachse oberhalb und in Fahrtrichtung vor dem Schwerpunkt S des Ballastiergewichts 38 liegt.

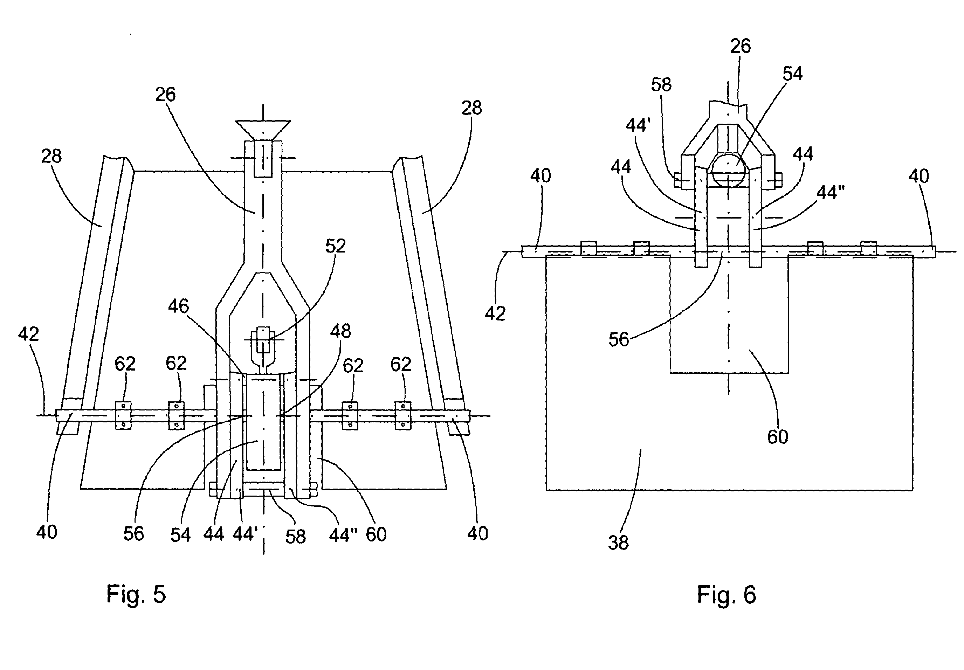

In dem in den Figuren 2 bis 6 dargestellten Ausführungsbeispiel umfassen die Schwenkmittel ein vorzugsweise dreieckförmiges Lenkblech 44, welches an seinen Eckpunkten einen ersten, einen zweiten und einen dritten Anlenkpunkt 46, 48, 50 aufweist. Ferner umfassen die Schwenkmittel ein Aufnahmelager 52 am Ballastiergewicht 38, sowie einen Lenker 54. Das Aufnahmelager 52 des Ballastiergewichts 38 ist in diesem Beispiel an der Oberseite des Ballastiergewichts 38 angeordnet, wobei andere Anordnungen denkbar sind. Der Lenker 54 erstreckt sich kinematisch wirksam zwischen Aufnahmelager 52 und dem ersten Anlenkpunkt 46 des Lenkblechs 44 und ist an einer Seite schwenkbar mit dem ersten Anlenkpunkt 46 des Lenkblechs 44 und an seiner anderen Seite schwenkbar mit dem Aufnahmelager 52 am Ballastiergewicht 38 verbunden ist. Der Lenker 54 ist ferner längenverstellbar ausgebildet, vorzugsweise als hydraulischer Zylinder, wobei der hydraulische Zylinder zylinderseitig schwenkbar mit dem Lenkblech 44 an dem Anlenkpunkt 46 und stangenseitig schwenkbar mit dem Aufnahmelager 52 verbunden ist. Der zweite Anlenkpunkt 48 des Lenkblechs 44 ist mittig zum Ballastiergewicht 38 und koaxial zur Schwenkachse 42 angeordnet und verbindet das Ballastiergewicht 38 schwenkbar mit dem Lenkblech 44. Hierbei wird das Lenkblech 44 direkt über einen Verbindungsbolzen 56, durch welchen gleichzeitig auch die Aufnahmebolzen 40 ausgebildet werden, schwenkbar mit dem Ballastiergewicht 38 verbunden. Es ist durchaus denkbar, den Verbindungsbolzen 56 und die Aufnahmebolzen 40 voneinander getrennt auszubilden. Die hier gewählte Ausbildung einer sich über das gesamte Ballastiergewicht 38 erstreckenden Stange, welche gleichzeitig Aufnahmebolzen 40, Schwenkachse 42 und Verbindungsbolzen 56 bildet, soll lediglich ein mögliches Ausführungsbeispiel darstellen. Die sich über das gesamte Ballastiergewicht 38 erstreckende Stange, welche gleichzeitig Aufnahmebolzen 40, Schwenkachse 42 und Verbindungsbolzen 56 bildet, ist über Befestigungslaschen 62 an dem Ballastiergewicht 38 befestigt. Es ist auch denkbar, dass entsprechende Stangen oder Zapfen, die als Aufnahmebolzen 40 dienen können, bei der Herstellung eines derartigen Ballastiergewichts 38 direkt angegossen bzw. angeschmiedet oder angeschweißt werden oder auch in dafür vorgesehene Ausnehmungen als Steckzapfen vorgesehen sind. An seinem dritten Anlenkpunkt 50 ist das Lenkblech 44 schwenkbar mit dem Anlenkpunkt 32 des Oberlenkers 26 verbunden. Als Verbindungsmittel dient ein Verbindungsbolzen 58, der den Oberlenker 26 und das Lenkblech 44 miteinander schwenkbar verbindet. Der Oberlenker 26 ist gabelförmig ausgebildet, siehe Figuren 5 und 6, wobei das Gebelende mit dem Lenkblech 44 verbunden ist. Das Lenkblech 44 weist zwei gegenüberliegende Lenkblechseiten 44', 44" auf, die auf der Innenseite der Gabelung des Oberlenkers 26 angeordnet sind. Somit erstreckt sich der Lenker 54 auf der Innenseite der Gabelung des Oberlenkers 26 zwischen den beiden Lenkblechhälften 44', 44''. Die Gabelung des Oberlenkers 26 ist vorgesehen, damit der Lenker 54 sowie das Lenkblech 44 bei Betätigung der Ballastiervorrichtung 36 ausschwenken können, da sie dabei einen entsprechenden Bewegungsspielraum beanspruchen. Um den benötigten Bewegungsspielraum auch im Bereich des Ballstiergewichts 38 zu gewährleisten, ist dieses mit einer Aussparung 60 versehen, die sich ebenfalls symmetrisch zu einer Fahrzeuglängsmittenachse (also mittig) bis ins Innere des Ballastiergewichts 38 erstreckt. Die Aussparung 60 ist derart bemessen, dass sich beim Verschwenken des Ballastiergewichts 38 bzw. bei Betätigung der Ballastiervorrichtung 36 sowohl das Lenkblech 44 bzw. 44' und 44" als auch der Oberlenker 26 bzw. dessen Gabelung in der Aussparung 60 frei bewegen können.

Das Ballastiergewicht 38 und die Dreipunktanhängevorrichtung 22 sind derart ausgebildet bzw. an die Ausgestaltung des Fahrzeugs 10 angepasst, dass das Ballastiergewicht 38 in fahrzeugnaher Position bis möglichst unterhalb des Fahrzeugrahmens 14 bewegt bzw. positioniert und möglichst nah an die Vorderachse 16 des Fahrzeugs 10 bewegt wird. In der fahrzeugfernen, oberen Position ist das Ballastiergewicht 38 in einer Position, die einen wesentlich höheren Schwerpunkt aufweist als die fahrzeugnahe untere Position.

Der Lenker 54 kann, als blockierbarer bzw. selbsthemmender Aktuator ausgebildet sein, so dass keine separate Arretiereinrichtung für die Ballastiervorrichtung 36 vorgesehen sein muss, sondern vielmehr die Arretierung hydraulisch erfolgt, wobei eine entsprechende hydraulische Ansteuerung für einen als Hydraulikzylinder ausgebildeten Lenker 54, derart vorgesehen ist, dass ein Hydraulikausfluss aus einer oder mehreren Kammern des Hydraulikzylinders durch ein oder mehrere Sperrventile blockierbar ist. Beispielsweise kann als Lenker 54 auch einen Spindelmotor (nicht gezeigt) als Aktuator vorgesehen sein, der ein entsprechend selbsthemmendes Gewinde aufweist.

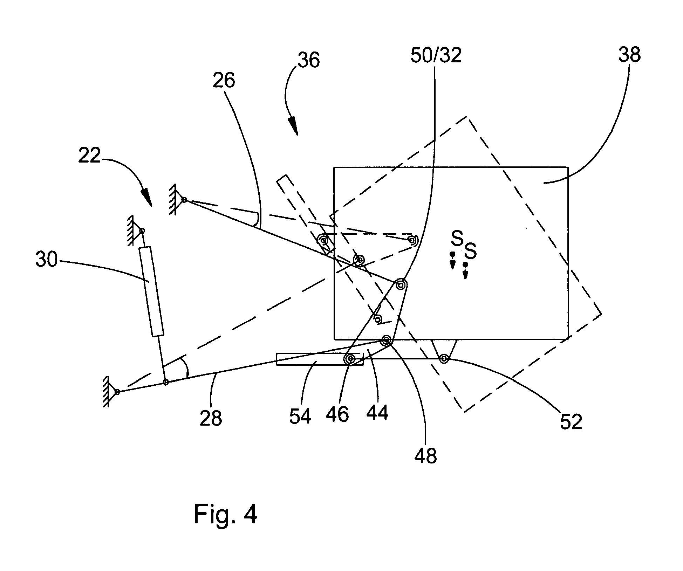

Wie in den Figuren 2 bis 4 abgebildet ist, kann die Ballstiervorrichtung 36 zweistufig betrieben werden, indem zunächst der längenverstellbare Lenker 54 ausgefahren wird. Dies führt dazu, dass das Ballastiergewicht 38 um seine Schwenkachse 42 verschwenkt wird, bis der Lenker 54 seine vollständige Länge eingenommen hat. Das Ballastiergewicht 38 wird dabei (je nach Anordnung der Oberlenker 26, Unterlenker 28, Lenkblech 44 und Lenker 54) um in etwa 120° verschwenkt, wobei der Schwerpunkt S des Ballastiergewichts 38 deutlich nach oben und nach vorn verschoben wird. Bei dieser ersten Betätigungsstufe werden der Oberlenker 26, die Unterlenker 28 und das Lenkblech 44 im wesentlichen in ihren Stellungen gehalten und halten ihrerseits die Schwenkachse fixiert. Erst durch Betätigung der als Hubzylinder ausgebildeten Hubstreben 30 (Ausfahren der Hubzylinder) wird die zweite Stufe eingeleitet (siehe Figur 4), indem die Unterlenker 28 nach unten bewegt werden. Dies führt dazu, dass der zweite und dritte Anlenkpunkt des Lenkblechs räumlich verschoben werden und eine Drehung des Lenkblechs 44, und damit verbunden ein zusätzliches Verschwenken des Ballastiergewichts 38, welches über den Lenker 54 und das Aufnahmelager 52 an das Lenkblech 44 gekoppelt ist, eingeleitet wird. Durch die zweite Bewegungsstufe kann eine weitere Verschiebung des Schwerpunkts S des Ballastiergewichts 38 nach oben erzielt werden, wodurch zusätzliche Bodenfreiheit gewonnen wird. Als Ergebnis hat nach vollständigem Ausfahren des längenverstellbaren Lenkers 54 und nach Ausfahren der als Hubzylinder ausgebildeten Hubstreben 30 das Ballastiergewicht 38 in etwa einen Schwenkwinkel von 180° vollzogen, wobei das Ballastiergewicht 38 in der fahrzeugnahen Position eine tiefere Schwerpunktlage einnimmt als in der fahrzeugfernen Position. Die Bewegungsstufen sind in ihrer Reihenfolge nicht aneinander gebunden und können unabhängig voneinander erfolgen, so dass eine auf den jeweiligen Anwendungsfall angepasste Verstellung des Ballastiergewichts 38 erfolgen kann, um eine möglichst optimierte, stufenlose Ballastierung bzw. Anordnung des Schwepunkts S des Ballastiergewichts 38 vornehmen zu können.

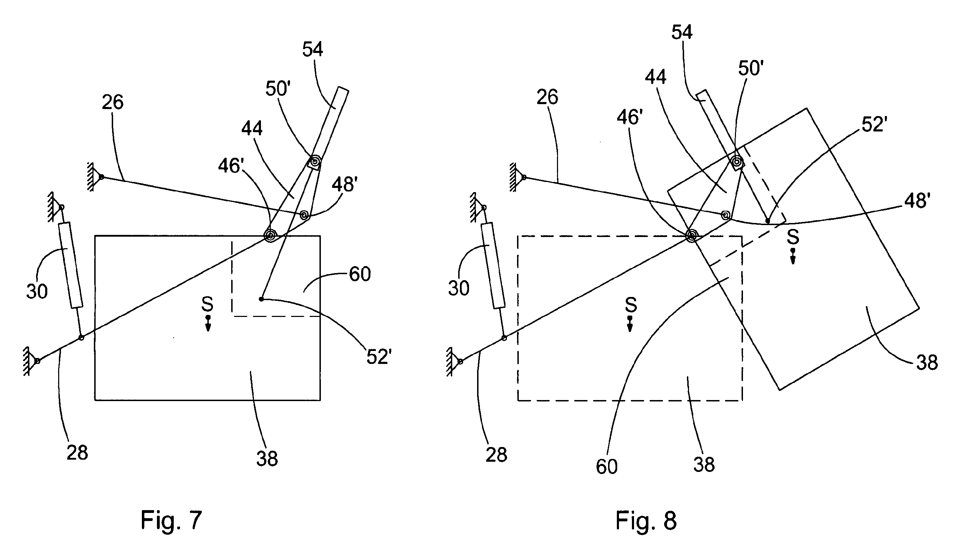

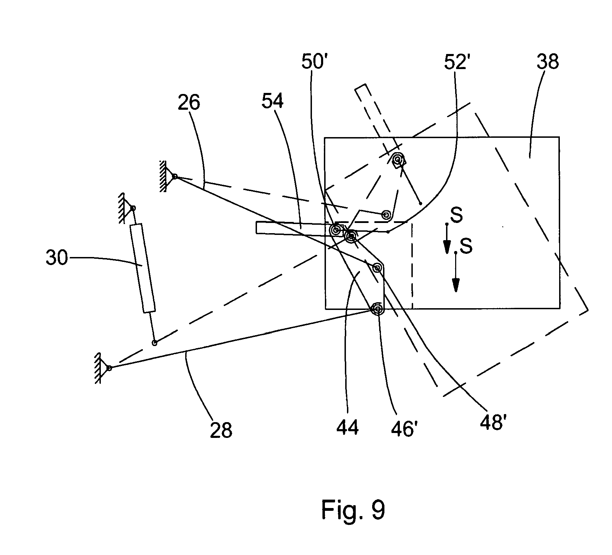

Ein zweites Ausführungsbeispiel wird anhand der Figuren 7 bis 11 beschrieben, wobei hier das Lenkblech 44 und der längenverstellbare Lenkers 54' eine zum ersten Ausführungsbeispiel verschiedene Anordnung aufweisen. Die Anlenkpunkte 46, 48, 50 des Lenkblechs 44 sowie das Aufnahmelager 52 des Ballastiergewichts 38 werden entsprechend mit 46', 48' 50' bzw. 52' bezeichnet. Ansonsten gelten die obigen Ausführungen auch für das zweite Ausführungsbeispiel. Der erste Anlenkpunkt 46' des Lenkblechs 44 ist hier, siehe Figur 7 bi 9, mittig zum Ballastiergewicht 38 und koaxial zur Schwenkachse 42 angeordnet und verbindet das Ballastiergewicht 38 schwenkbar mit dem Lenkblech 44. Ferner ist der zweite Anlenkpunkt 48' mit dem Oberlenker 26 der Dreipunktanhängevorrichtung 22 verbunden. Der dritte Anlenkpunkt 50' des Lenkblechs 44 ist mit dem längenverstellbaren Lenker 54 verbunden, welcher auch hier das Ballastiergewicht 38 an dem Aufnahmelager 52' mit dem Lenkblech 44 verbindet. Das Aufnahmelager 52' ist in diesem Fall jedoch innerhalb des Ballastiergewichts 38 im Bereich der Aussparung 60 angeordnet. Wie den Figuren 7 bis 9 zu entnehmen ist, weist der Lenker 54 dadurch in seiner Grundstellung eine ausgefahrene Stellung auf. Die Verstellung der Ballastierungvorrichtung 36 bzw. des Ballastiergewichts 38 erfolgt hier ebenfalls zweistufig. Aufgrund der gegenüber dem ersten Ausführungsbeispiel unterschiedlichen Anordnung des Lenkblechs 44 (bzw. Anlenkpunkte 46', 48', 50'), des Aufnahmelagers 52' und des Lenkers 54, wird eine Verstellung der Ballastiervorrichtung 36 in der ersten Stufe durch Einfahren des Lenkers 54 erzielt, wodurch das Ballastiergewicht 38 um die Schwenkachse 42 verschwenkt wird. Auch hier wird in ähnlicher Weise wie in dem Ausführungsbeispiel zu den Figuren 2 bis 6 ein erststufiges Verschwenken des Ballastiergewichts 38 um in etwa 120° erzielt (siehe Figur 8). Durch Ausfahren der Hubstreben 30 wird auf gleiche Weise und mit gleicher Wirkung wie im obigen Ausführungsbeispiel ein weiteres Verstellen der Ballastiervorrichtung 36 erzielt (sieh Figur 9), so dass nach vollständigem Einfahren des längenverstellbaren Lenkers 54 und nach Ausfahren der als Hubzylinder ausgebildeten Hubstreben 30 das Ballastiergewicht 38 in etwa einen Schwenkwinkel von 180° vollzogen hat, wobei das Ballastiergewicht in der fahrzeugnahen Position eine tiefere Schwerpunktlage einnimmt als in der fahrzeugfernen Position.

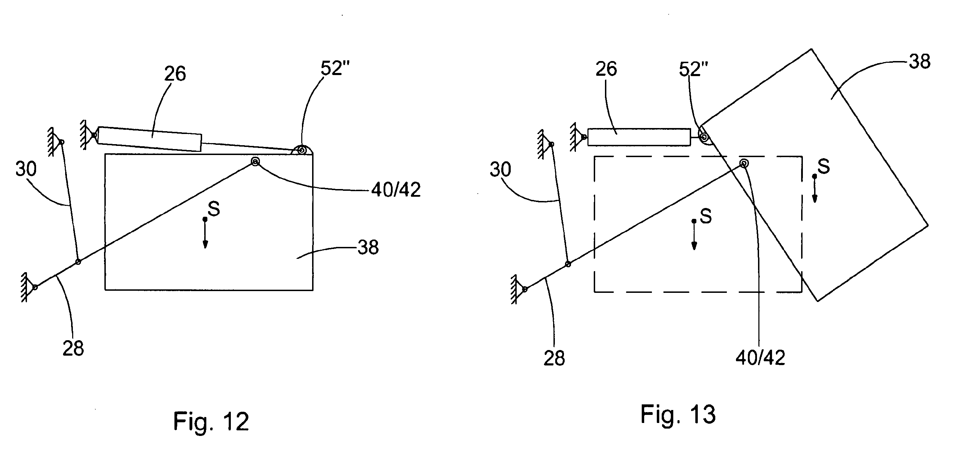

Ein drittes Ausführungsbeispiel wird anhand der Figuren 12 bis 15 beschrieben, wobei hier eine einstufige Verstellung der Ballastiervorrichtung 36 ausgebildet ist. Dies wird dadurch erzielt, dass das in den ersten und zweiten Ausführungsbeispielen vorhandene Lenkblech 44 entfallen ist, so dass durch Absenken oder Anheben der Unterlenker kein weiteres Verschwenken des Ballastiergewichts 38 erzielt werden kann. Hierbei ist der Oberlenker 26 als längenverstellbarer Lenker ausgebildet, beispielsweise als Hydraulikzylinder oder entsprechend einer der in den obigen Ausführungsbeispielen genannten Alternativen (Stellmotor etc.). Ohne Lenkblech 44 entfallen entsprechend die Anlenkpunkte 46, 48, 50 bzw. 46', 48',50'. Die Anordnung der Schwenkwelle 42 bzw. die Anordnung der die Schwenkwelle 42 definierenden Aufnahmebolzen 40 erfolgt entsprechend den obigen Ausführungsbeispielen. Das Aufnahmelager 52" hingegen ist in Fahrtrichtung vor der Schwenkwelle 42 an der Oberseite des Ballastiergewichts 38 angeordnet und mit dem Oberlenker 26 verbunden, wobei der Oberlenker in seiner Grundstellung eine ausgefahrene Stellung einnimmt (Figur 12). Durch Einfahren des Oberlenkers 26 (Figur 13) erfolgt nun ein Verschwenken des Ballastiergewichts 38 um die Schwenkachse 42, wobei der Schwerpunkt S des Ballastiergewichts 38 sich nach vorn und nach oben verlagert, wie in Figur 13 deutlich wird.

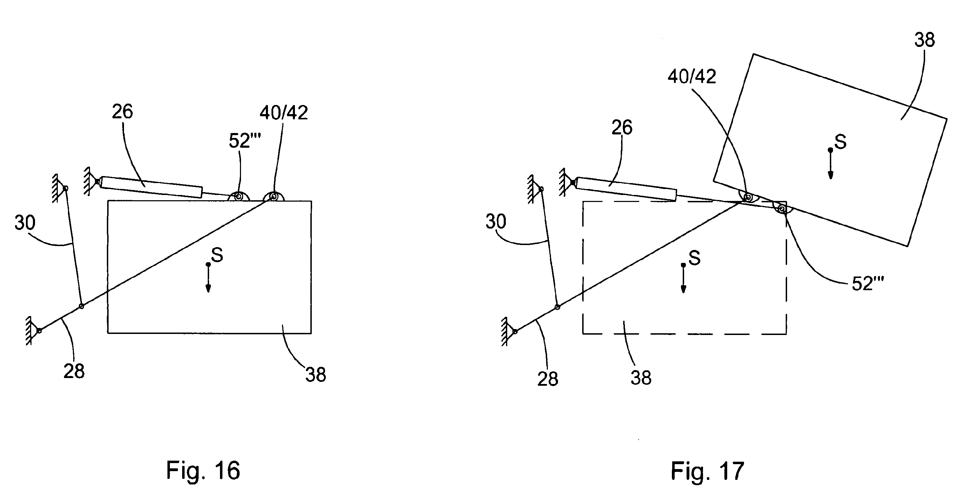

Ein viertes Ausführungsbeispiel wird anhand der Figuren 16 bis 19 beschrieben, wobei hier ebenfalls eine einstufige Verstellung der Ballastiervorrichtung 36 ausgebildet ist. Das vierte Ausführungsbeispiel unterscheidet sich zu dem vorhergehenden (dritten) Ausführungsbeispiel nur dadurch, dass das Aufnahmelager 52''', hier in Fahrtrichtung hinter der Schwenkwelle 42 an der Oberseite des Ballastiergewichts 38 angeordnet ist und der Oberlenker in seiner Grundstellung eine eingefahrene Stellung einnimmt (Figur 16). Durch Ausfahren des Oberlenkers 26 (Figur 17) erfolgt nun ein Verschwenken des Ballastiergewichts 38 um die Schwenkachse 42, wobei der Schwerpunkt S des Ballastiergewichts 38 sich nach vorn und nach oben verlagert, wie in Figur 17 deutlich wird.

Auch wenn die Erfindung in Bezug auf die Ballastiervorrichtung 36 lediglich anhand von vier Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Ballastiervorrichtung (36) für ein landwirtschaftliches Fahrzeug (10), mit einem Ballastiergewicht (38), welches seitliche Aufnahmebolzen (40) aufweist, die koaxial zu einer gemeinsamen Schwenkachse (42) ausgerichtet sind, wobei die Ballastiervorrichtung (36) an den Aufnahmebolzen (40) von den Unterlenkern (28) einer Dreipunktanhängevorrichtung (22) aufnehmbar ist und das Ballastiergewicht (38) in einem aufgenommenen Zustand der Ballastiervorrichtung (36) von einer in Bezug auf den Schwerpunkt (S) des Ballastiergewichts (38) fahrzeugnahen Position in eine fahrzeugferne Position bewegbar ist, **dadurch gekennzeichnet, dass** die Schwerpunktlage des Ballastiergewichts (38) in der fahrzeugnahen Position unterhalb der Schwenkachse (42) ist und Schwenkmittel vorgesehen sind, durch die das Ballastiergewicht (38) derart um die Schwenkachse (42) verschwenkbar ist, dass es aus der fahrzeugnahen Position in die fahrzeugferne Position bringbar ist, wobei das Ballastiergewicht (38) in der fahrzeugnahen Position eine tiefere Schwerpunktlage einnimmt als in der fahrzeugfernen Position.

2. Ballastiervorrichtung (36) nach Anspruch 1, **dadurch gekennzeichnet, dass** die Schwenkmittel ein Aufnahmelager (52, 52', 52", 52'") am Ballastiergewicht (38) aufweisen, an das ein längenverstellbarer Lenker (26, 54) schwenkbar koppelbar ist, derart, dass durch eine Längenänderung des Lenkers (26, 54) ein Verschwenken des Ballastiergewichts (38) erzielbar ist.

3. Ballastiervorrichtung (36) nach Anspruch 2, **dadurch gekennzeichnet, dass** an das Aufnahmelager (52", 52"') ein längenverstellbarer Lenker (26) einer Dreipunktanhängevorrichtung (22) koppelbar ist.

4. Ballastiervorrichtung (36) nach Anspruch 1 oder 2, **dadurch gekennzeichnet, dass** die Schwenkmittel ein Aufnahmelager (52, 52') am Ballastiergewicht (38), wenigstens ein Lenkblech (44) mit wenigstens drei Anlenkpunkten (46, 48, 50, 46', 48', 50') und einen längenverstellbaren Lenker (54) aufweisen, wobei das Lenkblech (44) an einem Anlenkpunkt (46, 50') über den längenverstellbaren Lenker (54) drehbar mit dem Aufnahmelager (52, 52') und an einem weiteren Anlenkpunkt (48, 46') koaxial zur Schwenkachse (42) drehbar mit dem Ballastiergewicht (38) verbunden ist, derart, dass durch eine Längenänderung des längenverstellbaren Lenkers (54) ein Verschwenken des Ballastiergewichts (38) gegenüber dem Lenkblech (44) erzielbar ist, wobei das Lenkblech (44) an einem weiteren Anlenkpunkt (50, 48') mit einem Lenker einer Dreipunktanhängevorrichtung (22) koppelbar ist.

5. Ballastiervorrichtung (36) nach einem der Ansprüche 2 bis 4, **dadurch gekennzeichnet, dass** der längenverstellbare Lenker (26, 54) als Aktuator, insbesondere als Hydraulikzylinder, ausgebildet ist.

6. Ballastiervorrichtung (36) nach einem der Ansprüche 1 bis 5, **dadurch gekennzeichnet, dass** die Schwenkmittel sich wenigstens teilweise durch eine am Ballastiergewicht (38) eingebrachte Aussparung (60) erstrecken, wobei die Aussparung (60) mittig zu einer Mittellängsachse des Fahrzeugs (10) ausgebildet ist.

7. Landwirtschaftliches Fahrzeug (10), insbesondere Schlepper (12), mit einem Fahrzeugrahmen (14), einer am vorderen Teil des Fahrzeugrahmens (14) befestigten Dreipunktanhängevorrichtung (22), mit einer Ballastiervorrichtung (36) gemäß einem der Ansprüche 1 bis 6.

## Claims

1. Ballast device (36) for an agricultural vehicle (10), having a ballast weight (38) which has lateral locating pins (40) which are oriented coaxially with a common pivot axis (42), wherein the ballast device (36) can be received by way of the locating pins (40) in the lower links (28) of a three-point hitching device (22) and, with the ballast device (36) in a received state, the ballast weight (38) is movable from a position close to the vehicle, with respect to the centre of gravity (S) of the ballast weight (38), to a position remote from the vehicle, **characterized in that** the centre of gravity position of the ballast weight (38) in the position close to the vehicle is below the pivot axis (42), and there are provided pivoting means, by way of which the ballast weight (38) is pivotable about the pivot axis (42) such that it is movable from the position close to the vehicle into the position remote from the vehicle, wherein the ballast weight (38) takes up a lower centre of gravity position in the position close to the vehicle than in the position remote from the vehicle.

2. Ballast device (36) according to Claim 1, **characterized in that** the pivoting means have a receiving bearing (52, 52', 52", 52"') on the ballast weight (38), to which a length-adjustable link (26, 54) is couplable in a pivotable manner, such that pivoting of the ballast weight (38) is achievable by changing the length of the link (26, 54).

3. Ballast device (36) according to Claim 2, **characterized in that** a length-adjustable link (26) of a three-point hitching device (22) is couplable to the receiving bearing (52", 52'").

4. Ballast device (36) according to Claim 1 or 2, **characterized in that** the pivoting means have a receiving bearing (52, 52') on the ballast weight (38), at least one deflector (44) with at least three attachment points (46, 48, 50, 46', 48', 50'), and a length-adjustable link (54), wherein the deflector (44) is connected in a rotatable manner to the receiving bearing (52, 52') at one attachment point (46, 50') via the length-adjustable link (54) and is connected in a rotatable manner to the ballast weight (38) at a further attachment point (48, 46') coaxially with the pivot axis (42), such that pivoting of the ballast weight (38) with respect to the deflector (44) is achievable by changing the length of the length-adjustable link (54), wherein the deflector (44) is couplable at a further attachment point (50, 48') to a link of a three-point hitching device (22).

5. Ballast device (36) according to one of Claims 2 to 4, **characterized in that** the length-adjustable link (26, 54) is formed as an actuator, in particular as a hydraulic cylinder.

6. Ballast device (36) according to one of Claims 1 to 5, **characterized in that** the pivoting means extend at least partially through a cutout (60) introduced into the ballast weight (38), wherein the cutout (60) is formed centrally with respect to a central longitudinal axis of the vehicle (10).

7. Agricultural vehicle (10), in particular a tractor (12), having a vehicle frame (14), a three-point hitching device (22) fastened to the front part of the vehicle frame (14) and having a ballast device (36) according to one of Claims 1 to 6.

## Revendications

1. Dispositif de ballastage (36) pour un véhicule agricole (10), comprenant un poids de ballastage (38) qui présente des axes de réception latéraux (40) qui sont orientés coaxialement à un axe de pivotement commun (42), le dispositif de ballastage (36) pouvant être monté sur les axes de réception (40) par les bras oscillants inférieurs (28) d'un dispositif d'attelage en trois points (22) et le poids de ballastage (38) pouvant être déplacé, dans un état monté du dispositif de ballastage (36), depuis une position proche du véhicule par rapport au centre de gravité (S) du poids de ballastage (38) dans une position éloignée du véhicule, **caractérisé en ce que** la position du centre de gravité du poids de ballastage (38) dans la position proche du véhicule est en dessous de l'axe de pivotement (42), et des moyens de pivotement sont prévus, lesquels permettent de faire pivoter le poids de ballastage (38) autour de l'axe de pivotement (42) de telle sorte qu'il puisse être amené de sa position proche du véhicule dans la position éloignée du véhicule, le poids de ballastage (38), dans la position proche du véhicule, adoptant une position plus basse du centre de gravité que dans la position éloignée du véhicule.

2. Dispositif de ballastage (36) selon la revendication 1, **caractérisé en ce que** les moyens de pivotement présentent un support de réception (52, 52', 52", 52"') sur le poids de ballastage (38), sur lequel peut être accouplé, de manière pivotante, un bras oscillant (26, 54) réglable en longueur, de telle sorte que l'on puisse obtenir un pivotement du poids de ballastage (38) par une variation de la longueur du bras oscillant (26, 54).

3. Dispositif de ballastage (36) selon la revendication 2, **caractérisé en ce qu'**un bras oscillant (26) réglable en longueur d'un dispositif d'attelage en trois points (22) peut être accouplé au support de réception (52", 52"').

4. Dispositif de ballastage (36) selon la revendication 1 ou 2, **caractérisé en ce que** les moyens de pivotement présentent un support de réception (52, 52') sur le poids de ballastage (38), au moins une tôle directrice (44) avec au moins trois points d'articulation (46, 48, 50, 46', 48', 50') et un bras oscillant (54) réglable en longueur, la tôle directrice (44) étant connectée au niveau d'un point d'articulation (46, 50') de manière rotative au support de réception (52, 52') par le biais du bras oscillant (54) réglable en longueur et au niveau d'un autre point d'articulation (48, 46') de manière rotative au poids de ballastage (38) coaxialement à l'axe de pivotement (42), de telle sorte qu'un pivotement du poids de ballastage (38) par rapport à la tôle directrice (44) puisse être obtenu par une variation de la longueur du bras oscillant (54) réglable en longueur, la tôle directrice (44) pouvant être accouplée en un autre point d'articulation (50, 48') à un bras oscillant d'un dispositif d'attelage en trois points (22).

5. Dispositif de ballastage (36) selon l'une quelconque des revendications 2 à 4, **caractérisé en ce que** le bras oscillant (26, 54) réglable en longueur est réalisé sous forme d'actionneur, notamment sous forme de vérin hydraulique.

6. Dispositif de ballastage (36) selon l'une quelconque des revendications 1 à 5, **caractérisé en ce que** les moyens de pivotement s'étendent au moins en partie à travers un évidement (60) pratiqué au niveau du poids de ballastage (38), l'évidement (60) étant réalisé centralement par rapport à un axe longitudinal médian du véhicule (10).

7. Véhicule agricole (10), en particulier tracteur (12), comprenant un châssis de véhicule (14), un dispositif d'attelage en trois points (22) fixé à la partie avant du châssis de véhicule (14), et comprenant un dispositif de ballastage (36) selon l'une quelconque des revendications 1 à 6.
